(19) Europäisches Patentamt / European Patent Office / Office européen des brevets

(11) **EP 2 588 813 B1**

(12) **FASCICULE DE BREVET EUROPEEN**

(45) Date de publication et mention de la délivrance du brevet:
**21.02.2018 Bulletin 2018/08**

(21) Numéro de dépôt: **11738324.0**

(22) Date de dépôt: **30.06.2011**

(51) Int Cl.:
*F24F 11/00* (2018.01)   *G05B 13/02* (2006.01)
*F24F 7/00* (2006.01)

(86) Numéro de dépôt international:
**PCT/IB2011/052901**

(87) Numéro de publication internationale:
**WO 2012/001657 (05.01.2012 Gazette 2012/01)**

(54) **QUALITÉ DE L'AIR D'UN LOCAL**

RAUMLUFTQUALITÄT

ROOM AIR QUALITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2010 FR 1055329**

(43) Date de publication de la demande:
**08.05.2013 Bulletin 2013/19**

(73) Titulaire: **SOMFY ACTIVITES SA 74300 Cluses (FR)**

(72) Inventeurs:
• **LAGARDE, Eric**
  **F-74700 Sallanches (FR)**
• **DUPIELET, Norbert**
  **Sallanches 74700 (FR)**
• **MARAVAL, Frédéric**
  **F-74190 Passy (FR)**

(74) Mandataire: **Rossi, Alexandra et al**
  **Bugnion SA**
  **10, route de Florissant**
  **1206 Genève (CH)**

(56) Documents cités:
**WO-A1-00/39506   US-A- 5 579 993
US-B1- 6 699 120**

• **KREIDER J F ET AL: "EXPERT SYSTEMS, NEURAL NETWORKS AND ARTIFICIAL INTELLIGENCE APPLICATIONS IN COMMERCIAL BUILDING HVAC OPERATIONS", AUTOMATION IN CONSTRUCTION, ELSEVIER SCIENCE PUBLISHERS, AMSTERDAM, NL, vol. 1, no. 3, 1 décembre 1992 (1992-12-01), pages 225-238, XP000339118, ISSN: 0926-5805, DOI: DOI:10.1016/0926-5805(92)90015-C**

EP 2 588 813 B1

**Description**

L'invention concerne le domaine de la ventilation naturelle d'un local au moyen d'un ou plusieurs moyens motorisés de ventilation naturelle. Des moyens motorisés de ventilation naturelle sont par exemple des ouvrants, disposés à la périphérie du local et motorisés chacun à l'aide d'un actionneur permettant l'ouverture ou la fermeture de l'ouvrant. L'ouvrant est par exemple un élément de fenêtre mobile en rotation sur 20° ou 30° autour d'un axe horizontal. Des actionneurs de type vérin à chaîne sont couramment utilisés pour motoriser ces ouvrants. Dans certains cas, il est possible de commander une ouverture partielle de l'ouvrant dans une position intermédiaire.

L'efficacité des moyens motorisés de ventilation naturelle dépend de leur nombre, de leur type et de leur emplacement sur la périphérie du local, de même que de nombreux paramètres extérieurs tels la présence d'écrans naturels ou artificiels et les conditions météorologiques. Les moyens de ventilation peuvent être commandés par un ou plusieurs capteurs de qualité de l'air, notamment des capteurs aptes à mesurer une concentration en dioxyde de carbone dans le local et/ou des capteurs de présence.

Le brevet EP 1 383 982 décrit un procédé de contrôle automatisé du niveau d'éclairage naturel et/ou d'énergie calorifique par gains solaires et/ou de la qualité de l'air par action sur une des ouvertures extérieures et/ou sur un moyen d'occultation, à l'aide d'un capteur de présence. Le brevet DE 40 23 673 décrit également une activation en fonction de la présence des occupants du local.

Le brevet US 5,259,553 décrit un système de contrôle de l'atmosphère intérieure d'un local muni de nombreux capteurs caractérisant la température et la qualité de l'air, l'éclairement, la température des parois, le nombre d'occupants et leur mouvement, la vitesse du vent, etc. en vue d'agir sur des actionneurs, par comparaison des valeurs de chaque capteur à des données préenregistrées.

Les brevets US 6,161,714 et US 6,398,118 décrivent également un système d'air conditionné (HVAC) dans lequel l'admission d'air extérieur est commandée par la mesure de concentration en dioxyde de carbone. Dans le premier cas, l'enthalpie de l'air extérieur est la variable de commande principale. Dans le deuxième cas, la concentration en $CO_2$ est comparée à plusieurs seuils.

Il a été recherché de s'affranchir de capteurs et/ou de produire des algorithmes de commande évitant le recours à des réglages de seuils, dont l'ajustement est souvent délicat.

Le brevet EP 0 637 368 décrit une méthode indirecte de mesure de débit d'air à partir de mesures de concentration d'un composant dans l'air extérieur à la structure et dans l'air intérieur à la structure. Le composant est par exemple du dioxyde de carbone.

Le brevet US 5,803,804 utilise un contrôle adaptatif pour évaluer la qualité de l'air extérieur avant de procéder au renouvellement de l'air dans un local.

Le brevet US 5,613,369 s'applique à une unité indépendante d'air conditionné (comme une unité disposée sur le plafond) pour laquelle l'algorithme de contrôle utilise comme variables l'écart entre température mesurée et température de consigne, et la variation de cet écart. L'algorithme peut être de type PID, à logique floue, ou avec algorithmes génétiques.

Le brevet US 4,873,649 décrit une méthode d'identification des paramètres d'un système HVAC par création de perturbations incrémentales sur les variables de contrôle, par exemple la vitesse du compresseur, celle du ventilateur, le chauffage de l'évaporateur. Les résultats des perturbations s'expriment sous la forme d'une matrice de type Jacobien, dont l'inverse permet la mise à jour de la loi de commande et l'optimisation de cette loi de commande.

Dans le brevet US 5,579,993, la loi de commande est obtenue cette fois en utilisant un réseau de neurones. Le contrôleur inclut un moyen d'anticipation. La méthode de contrôle utilise en fait un procédé de calcul anticipé des variables de contrôle (bloc 403) et une comparaison avec les variables de contrôle données par un régulateur de type PID (bloc 420) pour élaborer le signal de contrôle.

Cette approche de combinaison d'un procédé de retour (« feedback ») et d'un procédé d'anticipation (« feedforward ») est connue des automaticiens comme étant du type « commande par modèle interne » comme décrit dans le document « Internal Model Control » in : « Lectures Notes on Introduction to Robust Control by Ming T. Tham (2002) » Chemical and Process Engineering / University of Newcastle upon Tyne / lien internet : lorien.ncl.ac.uk/ming/robust/imc.pdf. La commande par modèle interne est supposée présenter une meilleure robustesse qu'une simple commande PID vis-à-vis d'écarts de modélisation.

La demande de brevet WO 00/39506, qui correspond à l'état de la technique le plus proche, décrit un procédé de contrôle de la ventilation naturelle dans une ou plusieurs zones d'un bâtiment, comprenant le calcul ou l'estimation d'une demande de ventilation en fonction d'un paramètre physique de la zone, d'une consigne de température intérieure et des valeurs actuelles des températures intérieure et extérieure. Dans le mode de réalisation préféré, l'unité de contrôle comprend un moyen intelligent d'auto-apprentissage avec réseau de neurones, contrôle flou ou algorithme génétique.

Le brevet US 6,699,120 décrit également un procédé d'optimisation, par logique floue, du contrôle d'ouvrants motorisés à l'aide de fonctions de confort prenant en compte la température intérieure, la teneur en $CO_2$ ou en humidité.

Il est enfin connu du brevet US 7,302,313 d'utiliser un système expert pour le contrôle d'une unité mobile de prélèvements et d'analyse de qualité de l'air.

Les systèmes et procédés de l'art antérieur ne permettent toutefois pas de satisfaire de manière simple le cas de la commande de moyens motorisés de ventilation naturelle, et plus encore si le but visé est de permettre une installation sans réglage, ou avec un minimum de réglages, et avec un nombre de capteurs aussi réduit que possible.

Du fait de l'ensemble des paramètres de réglage, la mise en service d'un dispositif de commande de ces moyens motorisés est en effet le plus souvent délicate pour l'installateur ce qui conduit à des réglages inadaptés, et la mise en oeuvre du procédé de ventilation produit alors des désagréments répétés, tel un flux d'air trop important pour les occupants quand les moyens motorisés de ventilation naturelle ont tous été activés simultanément.

Les documents de l'art antérieur proposant des méthodes d'identification font intervenir un arsenal mathématique hors de proportion avec l'usage de microcontrôleurs simples et bon marché. Par ailleurs les méthodes d'identification supposent de faibles variations incrémentales des variables de commande, qui peuvent être mises en oeuvre quand l'équipement est par exemple un ventilateur ou un compresseur dont on commande la vitesse, mais qui sont impossible à appliquer quand il s'agit de commander un panneau mobile de ventilation naturelle ayant simplement une position ouverte et une position fermée, voire une position intermédiaire.

De plus, la commande de moyens de ventilation naturelle à partir d'une simple information de présence se heurte aux défauts connus des capteurs de présence : un capteur de présence est généralement sensible au mouvement. Si le local est un espace de bureaux dont les occupants sont relativement immobiles devant le poste de travail, alors la détection de présence ne fonctionne pas ou mal avec ces simples détecteurs.

De même, la détermination et/ou le contrôle des flux d'air devrait se faire avantageusement sans recourir à des capteurs spéciaux, également sujets à mauvais fonctionnement.

Enfin, lorsqu'il s'agit de locaux familiaux ou tertiaires, le nombre d'occupants du local varie souvent de manière régulière au cours de la journée et de la semaine. Par exemple, une salle de réunion est occupée régulièrement le lundi après-midi pour une réunion de service regroupant un nombre de participants beaucoup plus important que les réunions habituelles : il est donc important que l'air ait été renouvelé avant l'arrivée des participants. Par contre, procéder à un renouvellement d'air important après la réunion s'il s'avère que la salle de réunion n'est pas utilisée jusqu'au lendemain et que la ventilation normale du local suffit à renouveler le volume d'air revient à un gaspillage d'énergie.

Un même type d'exemple peut se rencontrer dans le cadre d'une habitation : préparation des repas, utilisation des chambres etc. obéissent à des schémas répétitifs et des besoins en ventilation personnalisés au cours de la semaine, avec modifications éventuelles le week-end.

Dans le domaine artisanal, voire industriel, un atelier de carrosserie et peinture automobile présente également une utilisation marquée par un cycle journalier ou hebdomadaire particulier, par exemple pour bénéficier d'un tarif d'heures creuses dans l'utilisation des cabines de séchage.

Il est fastidieux de devoir paramétrer toutes ces informations, que seul l'utilisateur du local est à même de connaître et/ou de prévoir, et qui, de plus, sont susceptibles d'évolution sur des périodes longues (saisonnalité, embauche de nouveaux collaborateurs etc.).

L'invention remédie donc aux inconvénients et/ou lacunes de l'art antérieur.

Selon l'invention, le procédé de commande d'au moins un moyen motorisé de ventilation naturelle d'un local, à l'aide d'un dispositif de commande relié au moins à un premier capteur mesurant une qualité de l'air et disposé dans le local comprend :

- une étape (S12, S21) de détection d'une évolution spécifique de la mesure de qualité de l'air,
- une étape (S13, S22) d'enregistrement d'au moins une caractéristique temporelle relative à ladite évolution spécifique,
- une étape (S15, S23) de prévision de l'occurrence d'une prochaine évolution spécifique analogue, à partir des caractéristiques temporelles enregistrées.

Selon l'invention, la mesure de qualité de l'air peut comprendre au moins une concentration d'un gaz et/ou d'un composé organique volatil et une évolution spécifique de la qualité de l'air peut être une dégradation de la qualité de l'air si la concentration dépasse un premier seuil (TH1) et/ou si le taux de variation de la concentration dépasse un deuxième seuil (TH2) positif, tandis qu'une évolution spécifique de la qualité de l'air peut être une amélioration de la qualité de l'air si la concentration passe en dessous d'un troisième seuil (TH3) et/ou si le taux de variation de la concentration dépasse un quatrième seuil (TH4) négatif.

Selon l'invention, le procédé de commande peut comprendre une étape (S14) d'activation du moyen motorisé de ventilation naturelle suite à la détection d'une évolution spécifique, lorsque cette évolution spécifique est une dégradation de la qualité de l'air.

Selon l'invention, le procédé de commande peut comprendre une étape (S16) d'activation anticipée du moyen motorisé de ventilation naturelle avant l'occurrence d'une prochaine évolution spécifique, lorsque cette évolution spécifique est une dégradation de la qualité de l'air.

Selon l'invention, le procédé de commande peut comprendre une étape (S24) d'inhibition d'activation du moyen motorisé de ventilation naturelle avant l'occurrence d'une prochaine évolution spécifique, lorsque cette évolution spécifique est une amélioration de la qualité de l'air.

Selon l'invention, le procédé de commande peut comprendre une étape (S32, S33) d'évaluation et/ou de calcul d'un flux d'air et/ou d'un flux énergétique circulant entre l'extérieur et l'intérieur du local à partir d'au moins une information de température intérieure au local, issue d'un deuxième capteur mesurant une température et disposé dans le local. Selon l'invention, l'étape d'évaluation et/ou de calcul d'un flux d'air et/ou d'un flux énergétique peut utiliser en outre une information de température extérieure au local.

Selon l'invention, le procédé de peut comprendre une étape d'inhibition d'activation du moyen motorisé de ventilation naturelle lorsque le flux d'air dépasse un cinquième seuil (TH5) et/ou lorsque le flux énergétique dépasse un sixième seuil (TH6).

Selon l'invention, le procédé de commande peut comprendre une étape (S40) d'analyse de l'influence de différentes activations du moyen motorisé et/ou d'associations de moyens motorisés sur la qualité de l'air.

Selon l'invention, le procédé de commande peut comprendre une étape (S52) d'augmentation d'un seuil (TH1, TH2) provoquant, lors de son dépassement, l'activation du moyen motorisé de ventilation naturelle, si un nombre d'activations dépasse une valeur limite ou si est détectée une commande d'arrêt du moyen motorisé envoyée par un utilisateur au moyen d'un clavier de commande après une activation du moyen motorisé par le dispositif de commande.

Selon l'invention, le procédé de commande peut comprendre une étape (S53) de diminution d'un seuil (TH1, TH2) provoquant, lors de son dépassement, l'activation du moyen motorisé de ventilation naturelle, si est détectée une commande d'activation du moyen motorisé envoyée par un utilisateur au moyen d'un clavier de commande.

Selon l'invention, le procédé de commande peut comprendre une étape (S45) de détermination de paramètres d'une loi de commande du moyen motorisé ou des moyens motorisés, comprenant comme variable d'entrée au moins la mesure actuelle de la qualité de l'air, et comprenant comme variable de sortie l'état actuel d'activation du moyen motorisé, ou des moyens motorisés, de ventilation naturelle.

Selon l'invention, l'étape de détermination des paramètres peut utiliser un algorithme évolutionnaire de sélection d'individus, dans lequel les individus sont définis par un patrimoine génétique comprenant au moins l'état d'activation du moyen motorisé, ou les états d'activation des moyens motorisés, de ventilation naturelle et/ou dans lequel est utilisé un critère de sélection relatif à un premier score de qualité de l'air et/ou à un deuxième score de flux d'air et/ou à un troisième score de flux énergétique.

Selon l'invention, le dispositif de commande d'au moins un moyen motorisé de ventilation naturelle d'un local comprenant au moins un premier capteur mesurant une qualité de l'air et disposé dans le local, une horloge-calendrier fournissant une heure et date courante, une mémoire apte à enregistrer et à dater des événements d'évolution spécifique de la mesure de qualité de l'air, comprend en outre des moyens matériels et logiciels mettant en oeuvre le procédé tel que décrit ci-dessus.

Selon l'invention, les moyens logiciels peuvent comprendre au moins un premier programme (PRG1) d'exécution d'une loi de commande comprenant des paramètres et un deuxième programme (PRG2) de type évolutionnaire pour la détermination desdits paramètres ainsi que leur optimisation au cours du fonctionnement du dispositif de commande.

L'invention sera mieux comprise par l'homme du métier grâce à la description détaillée de différentes variantes du mode d'exécution en relation avec les dessins accompagnants, dans lesquels :

La figure 1 représente une installation munie d'un dispositif de commande utilisant le procédé de commande selon l'invention.

La figure 2 représente un premier exemple d'évolution du taux de dioxyde de carbone avec application du procédé de commande.

La figure 3 représente un mode d'exécution du procédé de commande.

La figure 4 représente partiellement une première variante du mode d'exécution.

La figure 5 représente partiellement une deuxième variante du mode d'exécution.

La figure 6 représente partiellement une troisième variante du procédé de commande constituant un mode d'apprentissage pour la mise en oeuvre du procédé de commande.

La figure 7 représente un deuxième exemple d'évolution de taux de dioxyde de carbone avec application du procédé de commande.

La figure 8 représente un troisième exemple d'évolution de taux de dioxyde de carbone avec application du procédé de commande.

La figure 9 représente partiellement une quatrième variante du procédé de commande.

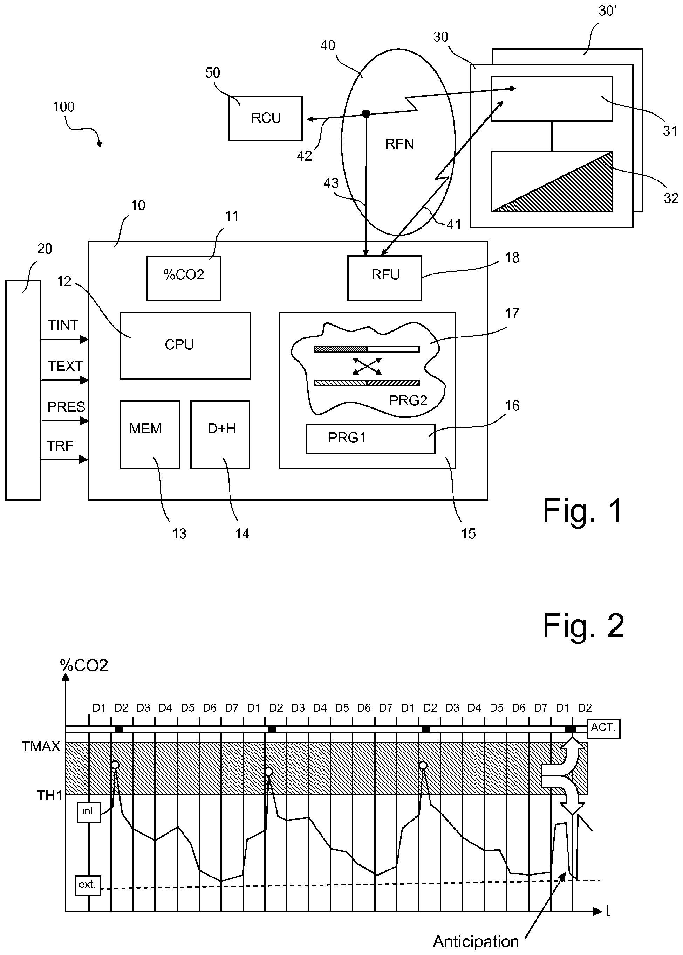

La figure 1 représente, dans un local non représenté, une installation 100 munie d'un dispositif de commande 10 utilisant le procédé de commande selon l'invention.

Le dispositif de commande comprend un capteur de qualité de l'air 11, apte à mesurer un paramètre de qualité de l'air. La qualité de l'air peut s'exprimer par une concentration dans l'air d'un gaz particulier ou d'un ensemble de gaz ou de composés organiques volatils. Par exemple le capteur de qualité de l'air peut être un simple capteur de dioxyde de carbone mesurant un taux de dioxyde de carbone $\%CO_2$, comme il sera décrit par la suite. Le capteur de qualité de l'air peut également être apte à fournir une mesure combinée de plusieurs concentrations de plusieurs gaz et/ou composés organiques volatils, cette mesure combinée résultant par exemple d'une somme pondérée de mesures relatives à chaque gaz et/ou composé organique volatil, fournies par des capteurs élémentaires du capteur de qualité de l'air.

Alternativement, le capteur de qualité de l'air est raccordé au dispositif de commande. Ce dernier comprend en outre une unité de traitement 12, telle qu'un microprocesseur, une mémoire de données 13, une horloge calendrier 14 et des moyens logiciels 15 incluant un ou plusieurs algorithmes de type classique 16 et un ou plusieurs algorithmes de type évolutionnaire 17, représentés symboliquement par un croisement de gènes.

Le dispositif de commande comprend également un transmetteur bidirectionnel 18, de type radiofréquences, permettant de communiquer sur un réseau domotique RFN représenté par la référence 40. Alternativement, le transmetteur bidirectionnel est raccordé au dispositif de commande ou est remplacé par un moyen de communication filaire ou tout autre moyen de communication classique bien connu de l'homme du métier.

Le dispositif de commande est de plus raccordé à un moyen d'information 20 apte à délivrer des informations de mesure de paramètres internes au local ou externes au local. Ces informations de mesure sont par exemple une température intérieure TINT, une température extérieure TEXT, une présence PRES, un taux d'humidité relative etc. Ces informations sont issues de capteurs particuliers et/ou d'un serveur. Les capteurs particuliers et/ou le serveur peuvent communiquer avec le dispositif de commande de manière séparée ou, préférentiellement, à l'aide du réseau domotique RFN.

L'installation comprend un ou plusieurs moyens motorisés de ventilation naturelle. Un premier moyen motorisé de ventilation naturelle 30 comprend un actionneur 31 raccordé à ouvrant mobile 32 ou trappe de ventilation. Ce moyen de ventilation naturelle est normalement disposé en périphérie du local, par exemple au niveau d'une baie vitrée dont il constitue un des éléments. Alternativement, il est disposé en extrémité d'un conduit de ventilation (d'extraction d'air, d'apport d'air), dont il contrôle l'ouverture. L'actionneur 31 est apte à communiquer sur le réseau domotique, et au moins à recevoir des ordres de la part du dispositif de commande.

L'ouvrant mobile est par exemple un panneau mobile sur 20° à 30° environ autour d'un axe horizontal. Il peut s'agir également d'une trappe indépendante. Le panneau mobile peut être également une fenêtre de type oscillo-battant, placée dans la configuration oscillante. Généralement, l'actionneur est de type vérin à chaîne et permet un mouvement limité de la trappe de ventilation entre une première position dite ouverte et une deuxième position dite fermée. Une position intermédiaire peut être parfois enregistrée dans une mémoire de l'actionneur. Alternativement, l'ouvrant mobile peut comprendre une pluralité de lames pivotantes autour d'axes parallèles entre la première position et la deuxième position. Dans ce cas, l'actionneur peut comprendre une transmission incluant une biellette d'entraînement en rotation de l'ensemble des lames pivotantes.

L'installation comprend un deuxième moyen motorisé de ventilation naturelle 30', par exemple analogue au premier moyen 30 et disposé ailleurs dans le local. Alternativement les moyens 30 et 30' varient en nature et/ou dimensions. L'installation peut ne comprendre qu'un seul moyen motorisé de ventilation naturelle ou, au contraire, plus de deux moyens.

Le dispositif de commande peut émettre des ordres de commande vers l'équipement comme représenté par une double flèche 41. Une unité de commande distante 50 comprenant par exemple un clavier-utilisateur peut également émettre des ordres vers l'équipement comme représenté par une double flèche 42. Ces ordres issus de l'unité de commande distante peuvent néanmoins être captés par le transmetteur bidirectionnel du dispositif de commande, comme représenté par une flèche 43, l'informant ainsi de commandes provenant de l'utilisateur du local.

L'installation peut également comprendre des moyens de ventilation mécanique contrôlée, comprenant par exemple un moteur à puissance variable (par exemple avec deux vitesses de rotation) et/ou comprenant des moyens réglables d'admission d'air extérieur. Ces moyens permettent d'agir sur l'admission d'air extérieur et sont assimilables à des moyens motorisés de ventilation naturelle.

La figure 2 représente un exemple simplifié d'évolution de taux %CO2 de dioxyde de carbone dans le local quand il y a application du procédé de commande selon l'invention. Ce taux évolue au cours du temps t. Les jours de la semaine sont représentés du lundi D1 au dimanche D7. Le local est de type professionnel.

L'interprétation de ce diagramme montre que, si l'air extérieur présente un taux sensiblement constant (comme représenté par la droite en trait pointillé), les concentrations élevées sont le résultat de l'usage du local. Par exemple, le taux de dioxyde de carbone diminue sensiblement les samedis et dimanches du fait de la non-occupation du local pendant la fin de semaine et du renouvellement normal de l'air. Au contraire, le taux remonte chaque semaine dès le lundi matin.

La forte croissance du mardi matin montre qu'a lieu régulièrement dans le local une réunion regroupant beaucoup plus de personnes qu'en moyenne. Un taux de dioxyde de carbone servant de seuil d'activation est dépassé (zone hachurée) et les moyens de ventilation naturelle sont activés (éventuellement après un léger décalage temporel, comme représenté au sommet de la figure sur une ligne d'activation ACT par un rectangle noir dont la longueur correspond à la durée d'activation), ce qui fait redescendre rapidement le taux de dioxyde de carbone, mais ce qui peut créer un désagrément du fait du flux d'air résultant. De plus un important apport d'air extérieur peut être préjudiciable sur le plan énergétique, parce qu'il faudra dépenser, à une heure de pointe tarifaire, une énergie coûteuse pour le réchauffer ou pour le refroidir.

De manière plus précise que l'information d'un simple capteur de présence, le taux de dioxyde de carbone est représentatif de l'usage qui est fait du local.

Ainsi, il est possible de mener une véritable anticipation dans le procédé de commande. Le procédé de commande selon l'invention est apte à identifier des événements de croissance du taux de dioxyde de carbone pour provoquer l'activation des moyens motorisés de ventilation naturelle de manière anticipée à partir de l'analyse historique des événements passés et mémorisés.

Par exemple, la récurrence de 3 événements de même type (dépassement) le mardi matin conduit le procédé de commande à provoquer une activation anticipée des moyens motorisés de ventilation naturelle dès le lundi soir pour que l'air du local se trouve dans un état optimum avant le début de ladite réunion du mardi matin. Contrairement aux dispositifs de l'art antérieur, aucune intervention humaine n'est nécessaire pour fixer cette activation anticipée.

Alternativement, le procédé de commande peut agir par anticipation dès le troisième lundi soir, sans attendre la confirmation de la récurrence. Ou encore, le procédé peut activer par anticipation seulement une partie des moyens motorisés de ventilation naturelle quand il y en a plusieurs, tant qu'il n'y a pas eu confirmation de la récurrence.

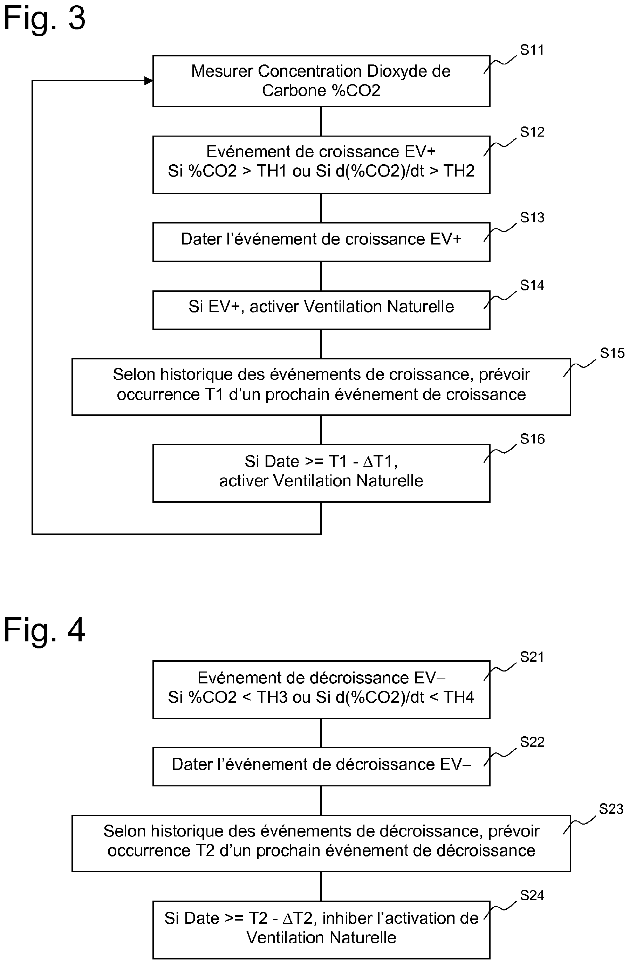

La figure 3 représente un mode d'exécution du procédé de commande, précisant ce qui vient d'être décrit en relation avec la figure 2.

Dans une première étape S11, il est mesuré au moins la concentration (ou le taux) en dioxyde de carbone dans le local.

Dans une deuxième étape S12, cette concentration est comparée à un premier seuil TH1 préalablement enregistré dans la mémoire de données 13.

Il faut noter que le premier seuil TH1 est choisi inférieur à une concentration maximum admissible TMAX, par exemple fixée par la réglementation.

Alternativement ou cumulativement, un taux de variation de la concentration est déterminé en déduisant la concentration mesurée lors de l'échantillonnage précédent et ce taux de variation (ou dérivée) est comparé à un second seuil TH2. Le dépassement de l'un ou l'autre de ces seuils provoque la définition d'un événement de croissance qui est daté dans une troisième étape S13 à l'aide de l'horloge calendrier et mémorisé dans la mémoire de données. Ainsi, il y a détection d'une évolution spécifique de la mesure de qualité de l'air dans la deuxième étape S12, puis enregistrement d'une caractéristique temporelle de l'évolution spécifique dans la troisième étape S13. L'évolution spécifique de la mesure de qualité de l'air, constituée par l'événement de croissance EV+, est une dégradation de la qualité de l'air si la concentration dépasse un premier seuil TH1 et/ou si le taux de variation de la concentration dépasse un deuxième seuil TH2 positif. D'autres critères pourraient également être retenus pour caractériser une dégradation de la qualité de l'air.

Le moyen motorisé de ventilation naturelle est alors activé dans une quatrième étape S14, c'est-à-dire qu'on ouvre la trappe de ventilation pour permettre l'arrivée d'air neuf (et/ou l'extraction d'air vicié). Le moyen reste activé automatiquement pendant une durée prédéterminée ou par exemple tant que le taux de dioxyde de carbone n'est pas redescendu en dessous d'un seuil.

L'émission d'une commande d'activation peut être du type « ordre d'activation totale » (commande 1 dans le cas de deux commandes possibles 0 ou 1). Alternativement, selon la nature du moyen motorisé de ventilation naturelle, elle peut être du type: «ordre d'activation croissante », provoquant un déplacement croissant d'un point de consigne (par exemple augmentation de la vitesse de consigne ou de la puissance de consigne d'un moteur électrique de ventilation forcée.

Lors d'une cinquième étape S15, le procédé de commande détermine une première date T1 d'une prochaine occurrence d'événement de croissance, à partir de l'historique des événements de croissance passés, mémorisés dans la mémoire de données. Au cours de la cinquième étape S15 est donc réalisée la prévision de l'occurrence d'une prochaine évolution spécifique analogue, à partir de comparaison des caractéristiques temporelles enregistrées dans la troisième étape S13.

Lors d'une sixième étape S16, le procédé de commande provoque l'activation anticipée du moyen motorisé de ventilation naturelle, à une date antérieure d'un premier écart ΔT1 à la première date T1. Le premier écart ΔT1 peut être prédéterminé ou résulter d'une stratégie liée aux tarifs, aux horaires, au taux de renouvellement d'air provoqué par les moyens motorisés de ventilation naturelle etc.

Le procédé boucle ensuite sur la première étape.

Appliqué pour la première fois au cas de la figure 2, on constate que le procédé active bien le moyen motorisé de ventilation naturelle dans l'étape S14 : le premier mardi matin (D2), puis le deuxième mardi matin, puis le troisième mardi matin lors d'un dépassement du premier seuil. (Il est clair que la prise en compte du taux de variation et du deuxième seuil pourrait provoquer une légère anticipation, de la même façon que dans un régulateur PID, mais la figure 2 représente un cas simplifié.) Lors des passages dans l'étape S15 ayant lieu avant le troisième mardi, une corrélation des événements EV+ est encore incertaine mais elle devient confirmée lors du troisième événement EV+ dans cette étape S15. D'où la prévision d'une prochaine occurrence le mardi matin suivant (date T1). Lors du passage dans l'étape S16 le lundi soir (date T1 - ΔT1) il y a alors activation du moyen motorisé de ventilation naturelle, bien que le taux d'oxyde de carbone mesuré à cette date soit nettement en dessous du seuil.

Ainsi le procédé présente l'avantage de pouvoir être appliqué par un dispositif éventuellement installé sur un bâtiment existant et sans le moindre paramétrage : il est parfaitement inutile d'indiquer au dispositif des plages horaires ou périodes d'occupation du local puisque le dispositif apprend de lui-même à définir ces plages horaires par l'analyse du passé, et à partir de l'évolution de la concentration mesurée. Malgré cet apprentissage, qui lui permettra une action préventive comme décrit plus haut, un tel dispositif est néanmoins immédiatement opérationnel pour réagir dès l'installation à des événements de dépassement de concentration et/ou de variation importante de concentration.

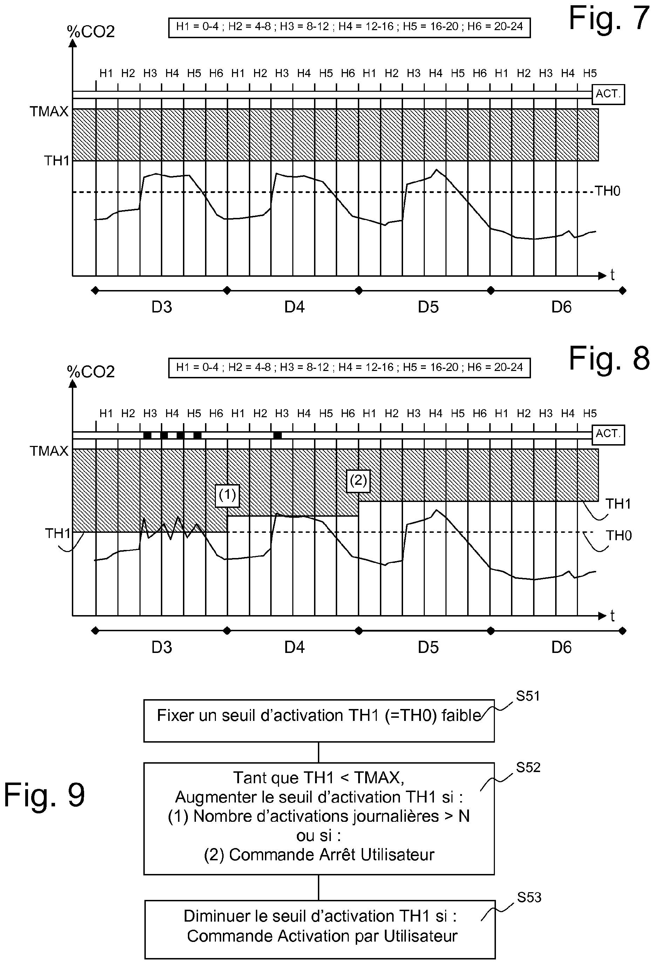

Le procédé s'applique aussi à des cas beaucoup plus simples et fréquents que celui qui vient d'être décrit à titre d'exemple. Il suffit que le seuil de réaction soit choisi relativement faible pour que le procédé permette de repérer non pas des événements de croissance qu'on peut qualifier d'exceptionnels mais des événements de croissance quotidiens, liés par exemple à l'arrivée des occupants dans un bureau le matin. Ces aspects sont détaillés aux figures 7 à 9.

La figure 4 représente des étapes additionnelles s'ajoutant au procédé tel que décrit précédemment et composant ainsi une première variante du mode d'exécution. Cette variante permet d'éviter l'activation du moyen de motorisé de ventilation naturelle quand on peut en faire l'économie.

Par exemple, un événement de croissance (lié à une réunion de service) peut se produire régulièrement le vendredi matin, alors qu'il est constaté une décroissance naturelle dès le vendredi après-midi, qui se prolonge tout le week-end. Il est alors préférable, en période de chauffage ou de climatisation du bâtiment, d'éviter d'activer une ventilation naturelle à une heure de pointe tarifaire, alors que le renouvellement naturel de l'air pendant le week-end permettra d'aborder la semaine suivante dans les meilleures conditions de qualité de l'air.

A cet effet, la première variante comprend une première étape S21 de définition d'un événement de décroissance EV- si le taux (la concentration) de dioxyde de carbone passe en dessous d'un troisième seuil TH3 et/ou si le taux de variation de cette concentration est passé en dessous d'un quatrième seuil TH4, ce quatrième seuil étant négatif, et le passage en dessous d'un seuil indiquant dans chaque cas une décroissance de la concentration en dioxyde de carbone.

Dans une deuxième étape S22, l'événement de décroissance est daté à l'aide de l'horloge calendrier et mémorisé dans la mémoire de données. Ainsi, il y a détection d'une évolution spécifique de la mesure de qualité de l'air dans la première étape S21, puis enregistrement d'une caractéristique temporelle de l'évolution spécifique dans la deuxième étape S22. Une évolution spécifique de la mesure de qualité de l'air, constituée par l'événement de décroissance EV-, est une amélioration de la qualité de l'air si la concentration passe en dessous d'un troisième seuil TH3 et/ou si le taux de variation de la concentration dépasse un quatrième seuil TH4 négatif. D'autres critères pourraient également être retenus pour caractériser une amélioration de la qualité de l'air.

Dans une troisième étape S23, l'historique des événements de décroissance mémorisés dans la mémoire de données est utilisé pour prévoir une deuxième date T2 d'occurrence d'un prochain événement de décroissance. Au cours de la troisième étape S23 est donc réalisée la prévision de l'occurrence d'une prochaine évolution spécifique analogue, à partir de comparaison des caractéristiques temporelles enregistrées dans la deuxième étape S22.

Dans une quatrième étape S24, la date courante est comparée à une date anticipant la deuxième date par décalage d'un deuxième écart $\Delta$T2, par exemple égal à une heure ou à deux heures. Si la date courante est telle qu'un événement de décroissance se produit à une date prochaine (écart $\Delta$T2), alors on inhibe l'activation du moyen motorisé de ventilation naturelle.

Les étapes additionnelles décrites en relation avec la figure 4 s'insèrent par exemple entre la troisième étape S13 et la quatrième étape S14 du procédé de commande. L'étape S14 est donc inhibée si l'étape S24 provoque cette inhibition. Il est toutefois également possible d'insérer ces étapes additionnelles entre d'autres étapes du procédé.

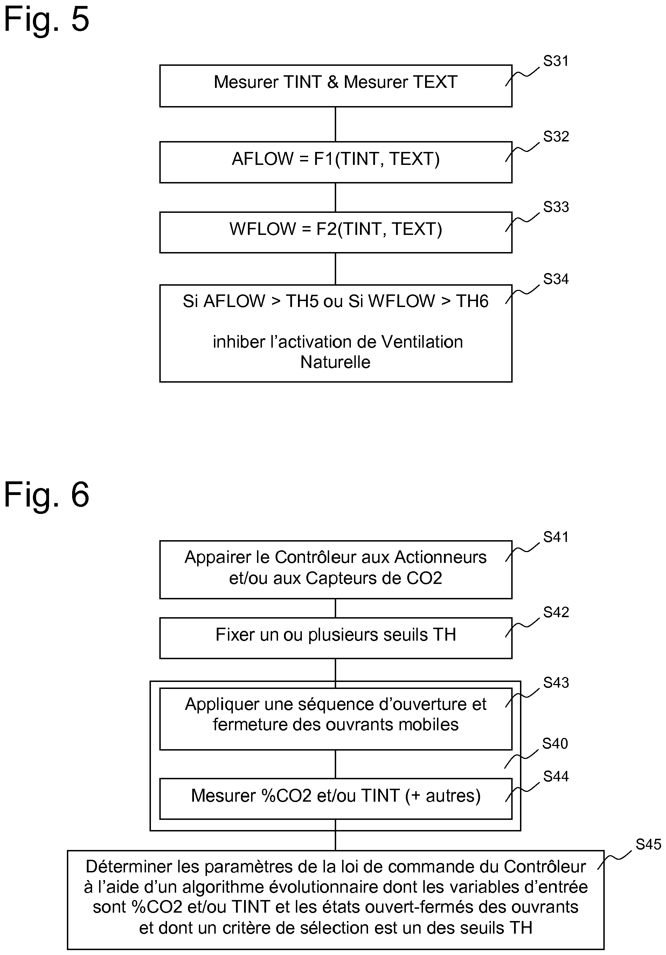

La figure 5 représente des étapes additionnelles s'ajoutant au procédé tel que décrit en relation avec la figure 3 et composant ainsi une deuxième variante du mode d'exécution.

Cette deuxième variante permet de déduire un flux d'air AFLOW (ou une grandeur représentative d'un flux d'air) et/ou un flux d'énergie WFLOW (ou une grandeur représentative d'un flux d'énergie) à partir de mesures de température extérieure et de température intérieure.

Dans une première étape S31 de la deuxième variante, on mesure la température intérieure et la température extérieure. La température intérieure est nécessairement mesurée par un capteur de température intérieure, disposé dans le local, si possible à proximité du moyen motorisé de ventilation naturelle dans le cas décrit plus loin d'une utilisation de ce capteur pour une mesure indirecte de débit. La température extérieure peut être mesurée par un capteur communiquant avec le dispositif de commande ou encore peut être transmise, sous forme d'information de température extérieure, par un serveur météorologique.

Dans un mode de réalisation simplifié, la connaissance de la température extérieure n'est pas indispensable.

Dans une deuxième étape S32, on détermine le flux d'air AFLOW à l'aide d'une première fonction F1 dont les variables sont la température intérieure et éventuellement la température extérieure. La première fonction peut par exemple s'écrire :

$$AFLOW = A1 \times d(TINT/dt)$$

En effet, une variation brutale de la température intérieure s'interprète comme résultant de l'activation de la ventilation naturelle. Cette équation peut-être considérée comme valable uniquement lors de l'activation du moyen motorisé de ventilation naturelle.

Dans une troisième étape S33, on détermine le flux d'énergie WFLOW à l'aide d'une deuxième fonction F2 dont les variables sont la température intérieure et, si possible, la température extérieure. La deuxième fonction peut par exemple s'écrire :

$$WFLOW = A2 \times (TEXT\text{-}TINT)$$

En effet, un apport énergétique ou une déperdition énergétique résulte de l'écart entre la température d'air extérieur et la température d'air intérieur.

Cette équation peut-être considérée comme valable uniquement lors de l'activation du moyen motorisé de ventilation naturelle. Pour le calcul, la température d'air intérieur peut être considérée comme égale à sa valeur initiale au moment du début d'activation.

Dans une quatrième étape S34, on provoque l'inhibition du moyen motorisé de ventilation naturelle si le flux d'air dépasse un cinquième seuil TH5 ou si le flux énergétique dépasse un sixième seuil TH6 (dans un sens ou dans l'autre sens). Dans le premier cas (seuil TH5), l'inhibition résulte d'un objectif de confort aéraulique (éviter un courant d'air) tandis que dans le deuxième cas (seuil TH6) elle résulte d'un objectif économique (éviter un apport d'énergie en période de climatisation ou éviter une déperdition d'énergie en période de chauffage).

Alternativement, les trois premières étapes de cette deuxième variante sont remplacées par des mesures directes de flux d'air et/ou de flux d'énergie à l'aide de capteurs spécifiques.

Comme dans le cas de la première variante, les étapes additionelles décrites en relation avec la figure 4 s'insèrent par exemple également entre la troisième étape S13 et la quatrième étape S14 du procédé de commande. De manière similaire à la première variante, l'étape S14 est alors inhibée si l'étape S34 provoque cette inhibition. Il est toutefois également possible d'insérer ces étapes entre d'autres étapes du procédé de commande.

Dans le procédé, certains seuils sont préférentiellement prédéterminés, par exemple les seuils relatifs aux concentrations en dioxyde de carbone, alors que d'autres seuils peuvent évoluer en fonction de conditions extérieures : par exemple le cinquième seuil, relatif à la circulation de l'air dans le local peut dépendre de l'écart de température entre l'air extérieur et l'air intérieur. Il est en effet plus supportable de subir un courant d'air de même température que la température ambiante qu'un courant d'air de température très différente. Les seuils relatifs aux concentrations en dioxyde de carbone, et plus généralement les seuils relatifs à la mesure de qualité de l'air, peuvent aussi évoluer à partir de valeurs prédéterminées, comme décrit aux figures 8 et 9.

D'autres variantes du procédé sont possibles, par exemple en introduisant une ou plusieurs positions intermédiaires du moyen motorisé de ventilation naturelle et/ou en combinant les actions de plusieurs de ces moyens.

Les différentes étapes du procédé de commande et de ses variantes peuvent être mises en oeuvre avec des moyens logiciels classiques, les déroulant de manière séquentielle et/ou en parallèle pour certaines. Un processus d'oubli est avantageusement ajouté au procédé afin de lui permettre de s'adapter à une modification profonde du comportement des utilisateurs.

Cependant il est préféré l'utilisation d'au moins un algorithme de type évolutionnaire pour la mise en oeuvre du procédé.

Un tel algorithme permet de déterminer rapidement une solution optimale des paramètres d'une loi de commande du dispositif à partir d'une série aléatoire de jeux de variables comprenant en particulier l'état ouvert ou fermé du moyen de ventilation naturelle, la température intérieure et/ou extérieure, la date (jour et heure) et comprenant le taux de dioxyde de carbone et/ou son taux de variation. Le critère de sélection (permettant de converger dans chaque cas vers une solution optimale) sera l'écart à un seuil (de concentration en dioxyde de carbone, de flux énergétique, de flux d'air). L'algorithme évolutionnaire prend en compte les événements passés pour améliorer les paramètres de la loi de commande et comprend naturellement le processus d'oubli. De manière simplifiée, dans un algorithme génétique utilisé comme algorithme évolutionnaire, des « individus » sont caractérisés par un « patrimoine génétique » constitué par un état possible du système, c'est-à-dire une valeur arbitraire de chacune des variables citées ci-dessus. Les valeurs arbitraires sont choisies de manière à limiter le nombre total d'individus : la « population ». Un score, représentatif par exemple de la qualité de l'air ou du flux énergétique (ou de la consommation énergétique), ou de flux d'air est calculé pour chaque individu. Les individus de plus faible score ne passent pas la génération suivante et sont donc éliminés. A la génération suivante, les individus éliminés sont remplacés par de nouveaux individus de patrimoine génétique modifié, par exemple de manière aléatoire (« mutation »). Alternativement, des croisements de type sexué ont lieu entre individus par échange de la moitié du patrimoine génétique. Le processus de calcul de score et de sélection recommence alors avec la nouvelle génération. L'algorithme évolutionnaire permet de converger rapidement vers un optimum (le patrimoine génétique donnant le meilleur score).

Ainsi, dans la version d'implantation préférée du procédé, celui-ci comprend une loi de commande sous forme d'un premier programme PRG1 de type classique dont la variable de sortie est la commande d'activation du moyen motorisé de ventilation naturelle (ou dont les variables de sortie sont les commandes d'activation des moyens motorisés de ventilation naturelle, et/ou d'autres moyens motorisés éventuels) et dont les variables d'entrée sont au moins la concentration en dioxyde de carbone et la date (jour et heure) et peuvent également comprendre la température intérieure et extérieure, une information de présence, une information météorologique (vitesse du vent, ensoleillement etc.). La loi de commande relie les variables de sortie aux variables d'entrée aux moyens de paramètres.

Ces paramètres sont eux mêmes déterminés par un deuxième programme PRG2, de type évolutionnaire, permettant de déterminer la valeur optimale des paramètres en fonction de contraintes fixées par les seuils et en fonction de l'historique des événements de croissance ou de décroissance des concentrations en dioxyde de carbone. Notamment, les valeurs optimales du premier écart $\Delta T1$ et/ou du deuxième écart $\Delta T2$ peuvent être ainsi déterminées, relativement à différentes situations identifiées.

La combinaison des deux programmes permet d'obtenir les actions d'anticipation et/ou d'inhibition du procédé de commande.

La figure 6 représente des étapes additionnelles s'ajoutant au procédé tel que décrit en relation avec la figure 3, composant ainsi une troisième variante du procédé de commande. Ces étapes constituent avantageusement un mode d'apprentissage pour la mise en oeuvre du procédé de commande. Ces étapes additionnelles peuvent par exemple avantageusement s'insérer avant l'étape S11 du procédé de commande.

La mise en oeuvre du mode d'apprentissage permet une mise en oeuvre plus rapide et plus satisfaisante d'une installation comprenant un dispositif de commande utilisant le procédé de commande et comprenant au moins un programme de type évolutionnaire.

Dans une première étape S41 du mode d'apprentissage, l'installateur installe le dispositif de commande (par exemple au sein d'une installation existante comprenant déjà plusieurs moyens motorisés de ventilation naturelle) et il appaire le dispositif de commande aux différents capteurs (notamment capteur ou capteurs de dioxyde de carbone s'ils sont séparés du dispositif) ainsi qu'aux différents moyens motorisés de ventilation naturelle. Alternativement, l'installateur réalise des liaisons filaires entre le dispositif de commande et les actionneurs de moyens motorisés et/ou les capteurs.

Sans se préoccuper de la position des capteurs et/ou des actionneurs, l'installateur passe aux étapes suivantes qui se déroulent préférentiellement de manière totalement automatique.

Dans une deuxième étape S42, on fixe un ou plusieurs seuils TH, notamment les seuils TH1 et/ou TH2 décrits plus haut, voire l'ensemble des seuils décrits TH1-TH6. Alternativement, le seuil est une valeur différente des seuils précédents, relativement aux mêmes grandeurs.

Ces seuils peuvent avoir été pré-enregistrés par le fabricant du dispositif de commande ou peuvent être téléchargés automatiquement sur un serveur à l'aide par exemple du réseau domotique RFN ou d'un autre moyen de communication.

Dans une troisième étape S43, une séquence d'ouverture et de fermeture des ouvrants mobiles est engagée automatiquement, par exemple sur plusieurs heures de fonctionnement. Cette séquence est préférentiellement aléatoire, provoquée par le dispositif de commande qui envoie des ordres d'activation vers les moyens motorisés de ventilation naturelle, et elle est datée par l'horloge calendrier. La séquence comporte un nombre élevé d'ouvertures et de fermetures.

Dans une quatrième étape S44, on mesure automatiquement et on enregistre les grandeurs issues des capteurs et au moins la concentration en dioxyde de carbone ou la température intérieure. Les variations de température intérieure sont corrélées à l'ouverture et/ou à la fermeture des ouvrants mobiles. D'autres grandeurs peuvent également être mesurées. La troisième (S43) et la quatrième étape (S44) peuvent avantageusement être regroupées en une seule étape d'analyse de l'influence de différentes activations du moyen motorisé et/ou d'associations de moyens motorisés sur la qualité de l'air (S40).

Dans une cinquième étape S45, un algorithme de type évolutionnaire est utilisé pour déterminer les paramètres de la loi de commande du dispositif de commande. Cet algorithme évolutionnaire est par exemple le même que celui utilisé dans le procédé de commande. Alternativement, il peut être modifié de manière à tenir compte de particularités prédéfinies de la séquence d'ouverture et de fermeture.

Dans les deux cas, un critère de sélection de l'algorithme évolutionnaire, servant de critère d'optimisation, est l'écart (qu'on peut souhaiter le plus élevé possible ou le plus faible possible) au seuil TH. Du fait de la séquence d'ouverture et fermeture de la troisième étape, l'identification des paramètres de la loi de commande est beaucoup plus rapide que par application du procédé de commande en limitant le mode d'apprentissage aux deux premières étapes.

Par ailleurs, lors de la séquence d'ouverture et de fermeture des ouvrants mobiles, les ordres d'activation permettent aussi de tester des associations de moyens motorisés de ventilation naturelle quand plusieurs moyens sont présents.

La figure 7 représente un deuxième exemple d'évolution de taux de dioxyde de carbone avec application du procédé de commande. L'échelle temporelle est plus dilatée que dans le cas de la figure 2 et s'étend sur 4 jours notés D3 à D6 (mercredi, jeudi, vendredi et samedi). Dans cet enregistrement, une journée est divisée en 6 plages de 4 heures : une première plage horaire H1 de 0 à 4 heures, une deuxième plage horaire H2 de 4 heures à 8 heures, une troisième plage horaire H3 de 8 heures à 12 heures, une quatrième plage horaire H4 de 12 heures à 16 heures, une cinquième plage horaire H5 de 16 heures à 20 heures et une sixième plage horaire H6 de 20 heures à 24 heures. On remarque sur cet enregistrement qu'à aucun moment la concentration en dioxyde de carbone n'atteint le premier seuil TH1. Cependant, l'enregistrement permet néanmoins de définir des évolutions spécifiques de la mesure de qualité de l'air, par exemple des événements de croissance et/ou de décroissance, relatifs à un seuil d'apprentissage TH0, inférieur au premier seuil TH1.

Le taux de variation de la mesure de qualité de l'air est également utilisé pour définir ces évolutions spécifiques, mais, pour simplifier, on ne représente pas la courbe dérivée de %$CO_2$ sur la figure 7.

L'enregistrement (et l'analyse de ses variations) montre que le local est occupé de manière régulière de 8 heures à 17 heures environ le mercredi et le jeudi, mais que le départ des occupants est plus précoce le vendredi : 14 heures environ, voire 13 heures. Lors des croissances journalières du matin, la pente est plus élevée que lors des décroissances (le taux de variation présente des valeurs positives plus fortes que les valeurs négatives) ce qui s'explique par le fait que l'arrivée des occupants du local augmente plus vite la concentration en dioxyde de carbone que leur départ quand le renouvellement d'air se fait sans activation du moyen motorisé ou des moyens motorisés de ventilation naturelle.

Le samedi D6, le local n'est pas occupé et le taux de dioxyde de carbone passe à son plus bas niveau. Le procédé s'applique également à la détection d'évolutions spécifiques de la mesure de qualité de l'air ne provoquant pas l'activation de ces moyens, mais se révélant utile à l'apprentissage de l'installation, par exemple en pouvant avantageusement se substituer à une fourniture d'horaires ou à l'usage de capteurs de présence comme dans l'art antérieur, ou au moins pour compléter et préciser l'information donnée par ces capteurs.

Avantageusement, du fait de son aptitude à valoriser des corrélations, l'algorithme évolutionnaire est également utilisé pour fixer le seuil d'apprentissage TH0 le plus adapté et/ou pour déterminer une procédure optimale de détection d'occupation du local à partir de valeurs de dérivée temporelle de la mesure de qualité de l'air.

La figure 8 représente un troisième exemple d'évolution de taux de dioxyde de carbone avec application du procédé de commande. Dans cet exemple, on reprend le même schéma d'occupation du local que dans le cas précédent. Par contre, le premier seuil TH1 est cette fois de type adaptatif et évolue selon la quatrième variante du procédé de commande partiellement décrite en figure 9.

La figure 9 représente des étapes additionnelles s'ajoutant au procédé tel que décrit en relation avec la figure 3 et composant ainsi une quatrième variante du procédé de commande. Ces étapes (S51, S52, S53) peuvent avantageusement s'intercaler entre chacune des étapes du procédé décrit en relation avec la figure 3.

Dans une première étape S51, on fixe une valeur initiale faible pour le premier seuil TH1. On ferait de même pour le deuxième seuil TH2. Par contre, dans une deuxième étape S52, ce seuil est incrémenté, du moins tant qu'il reste inférieur à la concentration maximum admissible TMAX, s'il s'avère que le moyen motorisé de ventilation naturelle est mal utilisé. Par mauvaise utilisation on entend un nombre d'activations journalières dépassant une valeur limite N prédéterminée, ou encore une activation jugée inopportune par l'utilisateur du local. L'utilisateur dispose par exemple d'un clavier de commande qui lui permet d'annuler une commande automatique du moyen motorisé de ventilation naturelle. Une telle réaction est le signe que le seuil d'activation est trop bas.

Le premier cas est celui qui se produit lors de la mise en service de l'installation le mercredi D3. Le seuil TH1 étant bas, il y a 4 activations dans la journée. Si N est fixé à 2 par exemple, alors le premier seuil TH1 est automatiquement incrémenté en fin de journée (par exemple à minuit). De ce fait, le lendemain jeudi D4, on ne constate qu'une seule activation. Cependant, l'utilisateur a réagi à cette activation, peut-être par crainte de voir se répéter le scénario de la veille. Toujours est-il que le premier seuil TH1 est de nouveau augmenté en fin de journée, cette fois du fait de la réaction de l'utilisateur. Cette variante du procédé, applicable à différents seuils, permet au seuil d'évoluer notamment en période de mise en service de l'installation. Préférentiellement, on bornera la valeur supérieure du premier seuil TH1 non pas à la valeur de concentration maximum admissible TMAX mais à une valeur inférieure, décalée d'une marge MG suffisante pour que l'ensemble du procédé garantisse une qualité de l'air aussi bonne que possible. La première ligne de la deuxième étape S52 s'écrit alors :

$$\text{Tant que TH1} < \text{TMAX} - \text{MG}$$

De plus, la valeur limite N peut être choisie comme variable en étant est elle-même susceptible d'évoluer à partir d'une valeur prédéterminée : par exemple, N = 4 le premier jour, 3 le deuxième jour et enfin 2 le troisième jour.

Dans la quatrième variante, on peut également appliquer le principe de variation du premier seuil au cas où la réaction de l'utilisateur consiste à activer lui-même le moyen motorisé de ventilation naturelle. Dans ce cas, il est clair que la valeur initiale du premier seuil a été choisie trop élevée et on réduit alors le seuil d'activation au cours d'une troisième étape S53.

Avantageusement, cet ajustement de seuil est également réalisé au moyen de l'algorithme évolutionnaire.

Comme décrit dans l'art antérieur, d'autres variables peuvent être prises en compte dans la loi de commande et dans l'apprentissage des paramètres de cette loi de commande, notamment le bruit extérieur et/ou une mesure spécifique de la qualité de l'air extérieur.

**Revendications**

1. Procédé de commande d'au moins un moyen motorisé de ventilation naturelle d'un local, à l'aide d'un dispositif de commande relié au moins à un premier capteur mesurant une qualité de l'air et disposé dans le local, **caractérisé en ce qu'**il comprend :

   - une étape (S12, S21) de détection d'une évolution spécifique de la mesure de qualité de l'air,

- une étape (S13, S22) d'enregistrement d'au moins une caractéristique temporelle relative à ladite évolution spécifique,

- une étape (S15, S23) de prévision de l'occurrence d'une prochaine évolution spécifique analogue, à partir des caractéristiques temporelles enregistrées.

2. Procédé de commande selon la revendication 1, **caractérisé en ce que** la mesure de qualité de l'air comprend au moins une concentration d'un gaz et/ou d'un composé organique volatil et **en ce qu'**une évolution spécifique de la qualité de l'air est une dégradation de la qualité de l'air si la concentration dépasse un premier seuil (TH1) et/ou si le taux de variation de la concentration dépasse un deuxième seuil (TH2) positif, tandis qu'une évolution spécifique de la qualité de l'air est une amélioration de la qualité de l'air si la concentration passe en dessous d'un troisième seuil (TH3) et/ou si le taux de variation de la concentration dépasse un quatrième seuil (TH4) négatif.

3. Procédé de commande selon l'une des revendications précédentes, **caractérisé en ce qu'**il comprend une étape (S14) d'activation du moyen motorisé de ventilation naturelle suite à la détection d'une évolution spécifique, lorsque cette évolution spécifique est une dégradation de la qualité de l'air.

4. Procédé de commande selon l'une des revendications précédentes, **caractérisé en ce qu'**il comprend une étape (S16) d'activation anticipée du moyen motorisé de ventilation naturelle avant l'occurrence d'une prochaine évolution spécifique, lorsque cette évolution spécifique est une dégradation de la qualité de l'air.

5. Procédé de commande selon l'une des revendications précédentes, **caractérisé en ce qu'**il comprend une étape (S24) d'inhibition d'activation du moyen motorisé de ventilation naturelle avant l'occurrence d'une prochaine évolution spécifique, lorsque cette évolution spécifique est une amélioration de la qualité de l'air.

6. Procédé de commande selon l'une des revendications précédentes, **caractérisé en ce qu'**il comprend une étape (S32, S33) d'évaluation et/ou de calcul d'un flux d'air et/ou d'un flux énergétique circulant entre l'extérieur et l'intérieur du local à partir d'au moins une information de température intérieure au local, issue d'un deuxième capteur mesurant une température et disposé dans le local.

7. Procédé de commande selon la revendication 6, **caractérisé en ce que** l'étape d'évaluation et/ou de calcul d'un flux d'air et/ou d'un flux énergétique utilise en outre une information de température extérieure au local.

8. Procédé de commande selon l'une des revendications 6 ou 7, **caractérisé en ce qu'**il comprend une étape d'inhibition d'activation du moyen motorisé de ventilation naturelle lorsque le flux d'air dépasse un cinquième seuil (TH5) et/ou lorsque le flux énergétique dépasse un sixième seuil (TH6).

9. Procédé de commande selon l'une des revendications précédentes, **caractérisé en ce qu'**il comprend une étape (S40) d'analyse de l'influence de différentes activations du moyen motorisé et/ou d'associations de moyens motorisés sur la qualité de l'air.

10. Procédé de commande selon l'une des revendications précédentes, **caractérisé en ce que** qu'il comprend une étape (S52) d'augmentation d'un seuil (TH1, TH2) provoquant, lors de son dépassement, l'activation du moyen motorisé de ventilation naturelle, si un nombre d'activations dépasse une valeur limite ou si est détectée une commande d'arrêt du moyen motorisé envoyée par un utilisateur au moyen d'un clavier de commande après une activation du moyen motorisé par le dispositif de commande.

11. Procédé de commande selon l'une des revendications précédentes, **caractérisé en ce que** qu'il comprend une étape (S53) de diminution d'un seuil (TH1, TH2) provoquant, lors de son dépassement, l'activation du moyen motorisé de ventilation naturelle, si est détectée une commande d'activation du moyen motorisé envoyée par un utilisateur au moyen d'un clavier de commande.

12. Procédé de commande selon l'une des revendications précédentes, **caractérisé en ce qu'**il comprend une étape (S45) de détermination de paramètres d'une loi de commande du moyen motorisé ou des moyens motorisés, comprenant comme variable d'entrée au moins la mesure actuelle de la qualité de l'air, et comprenant comme variable de sortie l'état actuel d'activation du moyen motorisé, ou des moyens motorisés, de ventilation naturelle.

13. Procédé de commande selon la revendication 12, **caractérisé en ce que** l'étape de détermination des paramètres utilise un algorithme évolutionnaire de sélection d'individus, dans lequel les individus sont définis par un patrimoine génétique comprenant au moins l'état d'activation du moyen motorisé, ou les états d'activation des moyens motorisés, de ventilation naturelle et/ou dans lequel est utilisé un critère de sélection relatif à un premier score de qualité de l'air et/ou à un deuxième score de flux d'air et/ou à un troisième score de flux énergétique.

14. Dispositif de commande d'au moins un moyen motorisé de ventilation naturelle d'un local comprenant au moins un premier capteur mesurant une qualité de l'air et disposé dans le local, une horloge-calendrier fournissant une heure et date courante, une mémoire apte à enregistrer et à dater des événements d'évolution spécifique de la mesure de qualité de l'air, **caractérisé en ce qu'**il comprend en outre des moyens matériels et logiciels mettant en oeuvre le procédé selon l'une quelconque des revendications 1 à 13.

15. Dispositif de commande selon la revendication 14, **caractérisé en ce que** les moyens logiciels comprennent au moins un premier programme (PRG1) d'exécution d'une loi de commande comprenant des paramètres et un deuxième programme (PRG2) de type évolutionnaire pour la détermination desdits paramètres ainsi que leur optimisation au cours du fonctionnement du dispositif de commande.

**Patentansprüche**

1. Verfahren zur Steuerung mindestens eines motorisierten Mittels für die natürliche Lüftung eines Raums mit Hilfe einer Steuervorrichtung, die mindestens mit einem ersten Sensor verbunden ist, der eine Qualität der Luft misst und in dem Raum angeordnet ist, **dadurch gekennzeichnet, dass** er umfasst:

   - eine Detektionsschritt (S12, S21) einer spezifischen Entwicklung der Luftqualitätsmessung,
   - einen Registrierungsschritt (S13, S22) mindestens eines Zeitmerkmals in Bezug zu der spezifischen Entwicklung,
   - einen Prognoseschritt (S15, S23) des Auftretens einer nächsten analogen spezifischen Entwicklung ausgehend von den registrierten Zeitmerkmalen.

2. Steuerungsverfahren nach Anspruch 1, **dadurch gekennzeichnet, dass** die Luftqualitätsmessung mindestens eine Konzentration eines Gases und/oder einer flüchtigen organischen Verbindung umfasst und dass eine spezifische Entwicklung der Qualität der Luft eine Verschlechterung der Qualität der Luft ist, wenn die Konzentration einen ersten Grenzwert (TH1) überschreitet und/oder wenn der Änderungsgrad der Konzentration einen zweiten positiven Grenzwert (TH2) überschreitet, wogegen eine spezifische Entwicklung der Qualität der Luft eine Verbesserung der Qualität der Luft ist, wenn die Konzentration passe unter einen dritten Grenzwert (TH3) sinkt und/oder wenn der Änderungsgrad der Konzentration einen vierten negativen Grenzwert (TH4) überschreitet.

3. Steuerungsverfahren nach einem der vorangehenden Ansprüche, **dadurch gekennzeichnet, dass** es einen Aktivierungsschritt (S14) des motorisierten Mittels für die natürliche Lüftung infolge der Detektion einer spezifischen Entwicklung umfasst, wenn diese spezifische Entwicklung eine Verschlechterung der Qualität der Luft ist.

4. Steuerungsverfahren nach einem der vorangehenden Ansprüche, **dadurch gekennzeichnet, dass** es einen Schritt der vorzeitigen Aktivierung (S16) des motorisierten Mittels für die natürliche Lüftung vor dem Auftreten einer nächsten spezifischen Entwicklung umfasst, wenn diese spezifische Entwicklung eine Verschlechterung der Qualität der Luft ist.

5. Steuerungsverfahren nach einem der vorangehenden Ansprüche, **dadurch gekennzeichnet, dass** es einen Hemmungsschritt (S24) der Aktivierung des motorisierten Mittels für die natürliche Lüftung vor dem Auftreten einer nächsten spezifischen Entwicklung umfasst, wenn diese spezifische Entwicklung eine Verbesserung der Qualität der Luft ist.

6. Steuerungsverfahren nach einem der vorangehenden Ansprüche, **dadurch gekennzeichnet, dass** es einen Bewertungs- und/oder Berechnungsschritt (S32, S33) eines Luftstroms und/oder eines Energiestroms umfasst, der zwischen außerhalb und innerhalb des Raums zirkuliert, ausgehend von mindestens einer Information über die Innentemperatur des Raums, gegeben von einem zweiten Sensor, der eine Temperatur misst und in dem Raum angeordnet ist.

7. Steuerungsverfahren nach Anspruch 6, **dadurch gekennzeichnet, dass** der Bewertungs- und/oder Berechnungsschritt eines Luftstroms und/oder eines Energiestroms ferner eine Information über die Außentemperatur des Raums verwendet.

8. Steuerungsverfahren nach einem der Ansprüche 6 oder 7, **dadurch gekennzeichnet, dass** es eine Hemmungsschritt der Aktivierung des motorisierten Mittels für die natürliche Lüftung umfasst, wenn der Luftstrom einen fünften Grenzwert (TH5) überschreitet und/oder wenn der Energiestrom einen sechsten Grenzwert (TH6) überschreitet.

9. Steuerungsverfahren nach einem der vorangehenden Ansprüche, **dadurch gekennzeichnet, dass** es einen Analyseschritt (S40) der Beeinflussung von verschiedenen Aktivierungen des motorisierten Mittels und/oder von Zuordnungen von motorisierten Mitteln im Zusammenhang mit der Qualität der Luft umfasst.

10. Steuerungsverfahren nach einem der vorangehenden Ansprüche, **dadurch gekennzeichnet, dass** es einen Erhöhungsschritt (S52) eines Grenzwerts (TH1, TH2) umfasst, was bei seiner Überschreitung zur Aktivierung des motorisierten Mittels für die natürliche Lüftung führt, wenn eine Anzahl von Aktivierungen eine Grenzwert überschreitet oder wenn ein Stoppbefehl des motorisierten Mittels festgestellt wird, der von einem Benutzer mittels einer Steuertastatur nach einer Aktivierung des motorisierten Mittels durch die Steuervorrichtung geschickt wurde.

11. Steuerungsverfahren nach einem der vorangehenden Ansprüche, **dadurch gekennzeichnet, dass** es einen Verringerungsschritt (S53) eines Grenzwerts (TH1, TH2) umfasst, was bei seiner Überschreitung zur Aktivierung des motorisierten Mittels für die natürliche Lüftung führt, wenn ein Aktivierungsbefehl des motorisierten Mittels festgestellt wird, der von einem Benutzer mittels einer Steuertastatur geschickt wurde.

12. Steuerungsverfahren nach einem der vorangehenden Ansprüche, **dadurch gekennzeichnet, dass** es einen Bestimmungsschritt (S45) von Parametern eines Steuergesetzes des motorisierten Mittels oder der motorisierten Mittel umfasst, umfassend als Eingangsvariable mindestens die aktuelle Messung der Qualität der Luft, und umfassend als Ausgangsvariable den aktuellen Aktivierungsstand des motorisierten Mittels für die natürliche Lüftung oder der motorisierten Mittel für die natürliche Lüftung.

13. Steuerungsverfahren nach Anspruch 12, **dadurch gekennzeichnet, dass** der Bestimmungsschritt der Parameter eine entwicklungsfähigen Algorithmus der Auswahl von Individuen verwendet, wobei die Individuen durch ein genetisches Erbe definiert sind, umfassend mindestens den Aktivierungsstand des motorisierten Mittels oder die Aktivierungsstände der motorisierten Mittel für die natürliche Lüftung und/oder wobei ein Auswahlkriterium in Bezug zu einem ersten Punktwert für die Qualität der Luft und/oder einem zweiten Punktwert für den Luftstrom und/oder einem dritten Punktwert für den Energiestrom verwendet wird.

14. Steuervorrichtung mindestens eines motorisierten Mittels für die natürliche Lüftung eines Raums, umfassend mindestens einen ersten Sensor, der die Qualität der Luft misst und in dem Raum angeordnet ist, eine Kalenderuhr, die eine Uhrzeit und das aktuelle Datum bereitstellt, einen Speicher, der imstande ist, Ereignisse der spezifischen Entwicklung der Luftqualitätsmessung zu registrieren und zu datieren, **dadurch gekennzeichnet**, es ferner Hard- und Softwaremittel umfasst, die das Verfahren nach einem der Ansprüche 1 bis 13 umsetzen.

15. Steuervorrichtung nach Anspruch 14, **dadurch gekennzeichnet, dass** die Softwaremittel mindestens ein erstes Ausführungsprogramm (PRG1) eines Steuergesetzes umfasst, umfassend Parameter, und ein zweites entwicklungsfähiges Programm (PRG2) für die Bestimmung der Parameter sowie ihrer Optimierung während des Betriebs der Steuervorrichtung.

**Claims**

1. A method for controlling at least one motorized natural ventilation means for a premises, using a control device connected to at least a first sensor measuring air quality and arranged on the premises, comprising:

   - a step (S12, S21) for detecting a specific evolution of the measurement of the air quality,
   - a step (S13, S22) for recording at least one time characteristic relative to said specific evolution,
   - a step (S15, S23) for anticipating the occurrence of a similar upcoming specific evolution, from the recorded time characteristics.

2. The control method according to claim 1, **characterized in that** the measurement of the air quality comprises at least one concentration of a gas and/or a volatile organic compound and **in that** a specific evolution of the air quality may be a deterioration of the air quality if the concentration exceeds a first threshold (TH1) and/or if the variation rate of the concentration exceeds a second positive threshold (TH2), while a specific evolution of the air quality may be an improvement of the air quality if the concentration goes below a certain threshold (TH3) and/or if the variation level of the concentration exceeds a fourth negative threshold (TH4).

3. The control method according to one of the preceding claims, **characterized in that** it comprises a step (S14) for activating the motorized natural ventilation means following the detection of a specific evolution, when that specific evolution is a deterioration of the air quality.

4. The control method according to one of the preceding claims, **characterized in that** it comprises a step (S16) for early activation of the motorized natural ventilation means before the occurrence of an upcoming specific evolution, when that specific evolution is a deterioration of the air quality.

5. The control method according to one of the preceding claims, **characterized in that** it comprises a step (S24) for inhibiting activation of the motorized natural ventilation means before the occurrence of an upcoming specific evolution, when that specific evolution is an improvement of the air quality.

6. The control method according to one of the preceding claims, **characterized in that** it comprises a step (S32, S33) for evaluating and/or calculating a flow of air and/or a flow of energy circulating between the outside and the inside of the premises from at least one piece of indoor temperature information on the premises, coming from a second sensor measuring the temperature and arranged on the premises.

7. The control method according to claim 6, **characterized in that** the step for evaluating and/or calculating a flow of air and/or a flow of energy also uses outside temperature information from the premises.

8. The control method according to one of claims 6 or 7, **characterized in that** it comprises a step for inhibiting activation of the motorized natural ventilation means when the flow of air exceeds a fifth threshold (TH5) and/or when the energy flow exceeds a sixth threshold (TH6).

9. The control method according to one of the preceding claims, **characterized in that** it comprises a step (S40) for analyzing the influence of different activations of the motorized means and/or combinations of motorized means on the air quality.

10. The control method according to one of the preceding claims, **characterized in that** it comprises a step (S52) for increasing a threshold (TH1, TH2) which, when it is exceeded, causes the activation of the motorized natural ventilation means, if a number of activations exceeds a threshold value or if a command is detected to stop the motorized means sent by a user using a control keypad after activation of the motorized means by the control device.

11. The control method according to one of the preceding claims, **characterized in that** it comprises a step (S53) for decreasing a threshold (TH1, TH2) which, when it is exceeded, causes the activation of the motorized natural ventilation means, if a command is detected to activate the motorized means sent by a user using the control keypad.

12. The control method according to one of the preceding claims, **characterized in that** it comprises a step (S45) for determining parameters of a command law of the or all of the motorized means, comprising, as input variable, at least the current measurement of the air quality, and comprising, as output variable, the current activation status of the or all of the motorized natural ventilation means.

13. the control method according to claim 12, **characterized in that** the step for determining parameters can use an evolving individual selection algorithm, in which the individuals are defined by a genetic heritage comprising at least the activation status of motorized natural ventilation means, or the activation statuses of all of the motorized natural ventilation means and/or in which a selection criterion is used relative to a first air quality score and/or a second air flow score and/or a third energy flow score.

14. A control device for at least one motorized natural ventilation means for a premises comprising at least one first sensor measuring the air quality and arranged on the premises, a clock/calendar providing a current time and date, a memory capable of recording and dating specific evolution events of the air quality measurement, **characterized in that** it also comprises hardware and software implementing the method according to any one of claims 1 to 13.

15. the control device according to claim 14, **characterized in that** the software means comprises at least one first program (PRG1) for running a command law comprising parameters and a second program (PRG2) evolving to determine said parameters as well as their optimization during the operation of the control device.

Fig. 1

Fig. 2

Anticipation

# Fig. 3

Mesurer Concentration Dioxyde de Carbone %CO2 — S11

Evénement de croissance EV+
Si %CO2 > TH1 ou Si d(%CO2)/dt > TH2 — S12

Dater l'événement de croissance EV+ — S13

Si EV+, activer Ventilation Naturelle — S14

Selon historique des événements de croissance, prévoir occurrence T1 d'un prochain événement de croissance — S15

Si Date >= T1 - $\Delta$T1,
activer Ventilation Naturelle — S16

# Fig. 4

Evénement de décroissance EV−
Si %CO2 < TH3 ou Si d(%CO2)/dt < TH4 — S21

Dater l'événement de décroissance EV− — S22

Selon historique des événements de décroissance, prévoir occurrence T2 d'un prochain événement de décroissance — S23

Si Date >= T2 - $\Delta$T2, inhiber l'activation de Ventilation Naturelle — S24

# Fig. 5

| | |
|---|---|
| Mesurer TINT & Mesurer TEXT | S31 |
| AFLOW = F1(TINT, TEXT) | S32 |
| WFLOW = F2(TINT, TEXT) | S33 |
| Si AFLOW > TH5 ou Si WFLOW > TH6<br><br>inhiber l'activation de Ventilation Naturelle | S34 |

# Fig. 6

| | |
|---|---|
| Appairer le Contrôleur aux Actionneurs et/ou aux Capteurs de CO2 | S41 |
| Fixer un ou plusieurs seuils TH | S42 |
| Appliquer une séquence d'ouverture et fermeture des ouvrants mobiles | S43 |
| | S40 |
| Mesurer %CO2 et/ou TINT (+ autres) | S44 |
| Déterminer les paramètres de la loi de commande du Contrôleur à l'aide d'un algorithme évolutionnaire dont les variables d'entrée sont %CO2 et/ou TINT et les états ouvert-fermés des ouvrants et dont un critère de sélection est un des seuils TH | S45 |

## Fig. 7

%CO2

H1 = 0-4 ; H2 = 4-8 ; H3 = 8-12 ; H4 = 12-16 ; H5 = 16-20 ; H6 = 20-24

H1 H2 H3 H4 H5 H6 H1 H2 H3 H4 H5 H6 H1 H2 H3 H4 H5 H6 H1 H2 H3 H4 H5

ACT.

TMAX

TH1

TH0

t

D3    D4    D5    D6

## Fig. 8

%CO2

H1 = 0-4 ; H2 = 4-8 ; H3 = 8-12 ; H4 = 12-16 ; H5 = 16-20 ; H6 = 20-24

H1 H2 H3 H4 H5 H6 H1 H2 H3 H4 H5 H6 H1 H2 H3 H4 H5 H6 H1 H2 H3 H4 H5

ACT.

TMAX

(1)

(2)

TH1

TH1

TH0

t

D3    D4    D5    D6

## Fig. 9

S51
Fixer un seuil d'activation TH1 (=TH0) faible

S52
Tant que TH1 < TMAX,
Augmenter le seuil d'activation TH1 si :
(1) Nombre d'activations journalières > N
ou si :
(2) Commande Arrêt Utilisateur

S53
Diminuer le seuil d'activation TH1 si :
Commande Activation par Utilisateur

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1383982 A
- DE 4023673
- US 5259553 A
- US 6161714 A
- US 6398118 B
- EP 0637368 A
- US 5803804 A

- US 5613369 A
- US 4873649 A
- US 5579993 A
- WO 0039506 A
- US 6699120 B
- US 7302313 B

**Littérature non-brevet citée dans la description**

- Internal Model Control. **MING T. THAM.** Lectures Notes on Introduction to Robust Control. Chemical and Process Engineering / University of Newcastle upon Tyne, 2002